(19) **Europäisches Patentamt / European Patent Office / Office européen des brevets**

(11) **EP 3 125 088 B1**

(12) # EUROPEAN PATENT SPECIFICATION

(45) Date of publication and mention
of the grant of the patent:
**22.08.2018  Bulletin 2018/34**

(21) Application number: **14887168.4**

(22) Date of filing: **25.03.2014**

(51) Int Cl.:
*G06F 3/048* (2013.01)   *G06F 3/0488* (2013.01)
*G06F 17/21* (2006.01)   *G06F 3/0483* (2013.01)
*G06F 3/0484* (2013.01)

(86) International application number:
**PCT/JP2014/058285**

(87) International publication number:
**WO 2015/145572 (01.10.2015 Gazette 2015/39)**

(54) **TERMINAL DEVICE, DISPLAY CONTROL METHOD, AND PROGRAM**

MOBILES ENDGERÄT, ANZEIGESTEUERUNGSVERFAHREN UND PROGRAMM

DISPOSITIF TERMINAL, PROCÉDÉ DE COMMANDE D'AFFICHAGE ET PROGRAMME ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.02.2017  Bulletin 2017/05**

(73) Proprietor: **Fujitsu Limited**
**Kawasaki-shi, Kanagawa 211-8588 (JP)**

(72) Inventors:
• **KATSUYAMA, Yutaka**
  **Kawasaki-shi**
  **Kanagawa 211-8588 (JP)**
• **UEHARA, Yusuke**
  **Kawasaki-shi**
  **Kanagawa 211-8588 (JP)**

(74) Representative: **Haseltine Lake LLP**
**Lincoln House, 5th Floor**
**300 High Holborn**
**London WC1V 7JH (GB)**

(56) References cited:
JP-A- 2005 049 920    JP-A- 2005 049 920
JP-A- 2009 271 901    JP-A- 2009 271 901
JP-A- 2012 226 393    JP-A- 2012 226 393
JP-A- 2013 080 513    JP-A- 2013 080 513
US-A1- 2012 306 778   US-A1- 2013 002 719
US-A1- 2013 042 199   US-A1- 2013 113 717
US-A1- 2014 013 216

**Description**

[Technical Field]

The following disclosure relates to a terminal device, a display control method, and a program.

[Background Art]

Since it may be difficult for farsighted or weak-sighted people to get proper sight of fine characters, magnifying glasses and reading glasses are often used to make viewing such characters easy. However, using magnifying glasses and reading glasses is tiresome, and carrying the glasses around is inconvenient.

In recent years, as smart phones have become popular, proposals have been made for mobile electronic devices such as smart phones that are carried about while going out, to have a function of magnifying glasses and reading glasses. Such a character enlargement function may be implemented, for example, by capturing an object by a camera installed in a smart phone, and displaying an enlarged image of a predetermined place of the captured object on a screen.

For example, according to Patent Document 1, an object of interest such as a face of a person is detected in an image displayed on a screen, and a display area and an enlargement ratio for enlarging and displaying the detected object are determined in accordance with the position and the size of the object. Then, the object of interest is enlarged and displayed by the determined enlargement ratio in the determined display area.

Patent Document 2 discloses to provide a character recognition method for identifying an objective character string when an image input by a camera or the like includes a plurality of character strings. By registering character string images including the plurality of character strings inside the image inputted by the camera or the like into a character string table, and selecting the registered character string image by an input means such as a button, a character is recognized from the selected character string image.

Patent Document 3 discloses a method to enable a user to change the order of display of a plurality of objects displayed on a picture. An icon column is displayed in a horizontal direction on a picture. When a user slides a stick in a horizontal direction by using a point on any icon in the icon column as a start point, the icon column can be scrolled in a horizontal direction according to the movement of a stick, and when the user slides the stick in a vertical direction by using a point on any icon in the icon column as a start point, only the icon can be moved according to the movement of the stick.

Patent Document 4 discloses a method to allow a user to obtain display of a portion required by the user when a map is displayed.

[Related-Art Documents]

[Patent Documents]

[Patent Document 1] Japanese Laid-open Patent Publication No. 2005-311888
[Patent Document 2] JP2005/049920A
[Patent Document 3] JP2009/271901A
[Patent Document 4] JP2013/080513A

JP 2012 226393 A discloses a mobile terminal with touchscreen and magnifying glass for enlarging a display region.

US 2014/013216 A1 discloses an electronic book reader including an enlargement region determining section which refers to line management information to determine, by assuming that a specified position on content is a reference, an enlargement region in a line including the position, and further determines, in a subsequent line, an enlargement region within a region that can be displayed in an enlarged manner in the line display area.

US 2013/042199 A1 discloses automatic zooming for text selection. When the computing device detects the removal of the single-finger single touch, the zoomed page of content is automatically zoomed out to display the page of content including the selected text at the original scale.

US 2012/306778 A1 discloses a magnifying loupe for magnifying a portion of a document. In response to detection of a gesture on a touch screen, a loupe is displayed showing a magnified view of a text portion. When the finger contact of the gesture is lifted up from the touch screen, a portion of the document is displayed in document editing mode.

US 2013/002719 A1 discloses apparatus and associated methods related to touch sensitive displays. In response to detection of first touch signaling on a particular portion of a touch-sensitive display, the apparatus displays a magnified view of at least that particular portion of the touch-sensitive display and an indicator positioned corresponding to the detected position of the first touch signalling. Upon release of the first touch signaling, the apparatus maintains the magnified view of that particular portion and the positioned indicator for a predetermined period. However, it is difficult for the above technology to enlarge and display strings of multiple lines by a high enlargement ratio because camera shake makes it hard to have specific lines contained in an area to be captured by the camera. Since an electronic device such as a smart phone is operated while being held by a hand, the above technology is largely influenced by the camera shake when the enlargement ratio is high, and it is difficult to precisely contain a line to be enlarged and displayed in the imaging area of the camera. As such, there are cases where moving the position to be enlarged and displayed is difficult along a line.

[Summary of the Invention]

[Problem to be Solved by Invention]

It is an object in an aspect to provide a terminal device, a display control method, and a program, with which when a string is to be enlarged and displayed, erroneous operations for specifying the position to be enlarged and displayed can be reduced.

[Means to Solve the Problem]

The invention is defined in the independent claims. Optional embodiments are set out in the dependent claims.

[Advantage of the Invention]

In an aspect, it is possible to reduce, when a string is to be enlarged and displayed, erroneous operations for specifying the position to be enlarged and displayed.

[Brief Description of Drawings]

FIG. 1 is a diagram that illustrates an example of a hardware configuration of a terminal device according to an embodiment;
FIG. 2 is a diagram that illustrates an example of a functional configuration of a terminal device according to an embodiment;
FIG. 3 is a flowchart that illustrates an example of a process for enlarging and displaying characters according to a first embodiment;
FIGs. 4A-4C are diagrams for describing extraction of strings (in English) by units of lines according to an embodiment;
FIGs. 5A-5C are diagrams for describing extraction of strings (in Japanese) by units of lines according to an embodiment;
FIGs. 6A-6D are diagrams that illustrate an example of enlarged display of characters according to the first embodiment;
FIG. 7 is a flowchart that illustrates an example of a process for enlarging and displaying characters according to a second embodiment;
FIGs. 8A-8D are diagrams that illustrate an example of enlarged display of characters according to the second embodiment;
FIG. 9 is a flowchart that illustrates an example of a process for enlarging and displaying characters according to a third embodiment;
FIG. 10 is a diagram for describing an example of enlarged display of characters according to the third embodiment;
FIG. 11 is a diagram for describing an example of enlarged display of characters according to the third embodiment;
FIG. 12 is a diagram for describing an example of enlarged display of characters according to the third embodiment;
FIG. 13 is a diagram for describing an example of enlarged display of characters according to the third embodiment; and
FIGs. 14A-14C are diagrams that illustrate an example of enlarged display of characters according to a modified example.

[Mode for Carrying Out the Invention]

In the following, embodiments in the disclosure will be described with reference to the drawings. Note that elements having substantially the same functional configurations throughout the specification and drawings are assigned the same codes to avoid duplicated description.

[Example of hardware configuration]

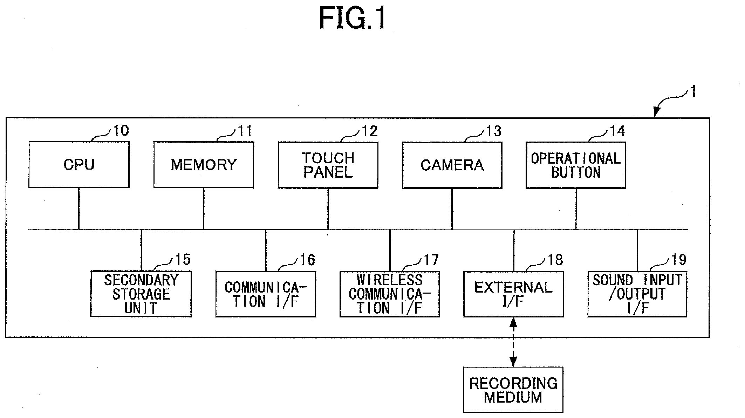

First, an example of a hardware configuration of a terminal device will be described according to an embodiment in the disclosure. FIG. 1 is a diagram that illustrates an example of a hardware configuration of a terminal device according to an embodiment. The terminal device according to an embodiment is an electronic device to execute a process for enlarging and displaying characters, and examples may include a smart phone, a tablet terminal, a cellular phone, and an electronic book. In the following, as an example of the terminal device according to the embodiment, a smart phone will be taken for description.

A smart phone 1 according to an embodiment includes a CPU (Central Processing Unit) 10, a memory 11, a touch panel 12, a camera 13, an operational button 14, a secondary storage unit 15, a communication I/F (Interface) 16, a wireless communication I/F 17, an external I/F 18, and a sound input/output I/F 19.

The CPU 10 manages and controls the units included in the smart phone 1. Functions provided with the smart phone 1 are implemented by the CPU 10 that reads programs stored in the memory 11 constituted with a ROM (Read-Only Memory), a RAM (Random Access Memory), and the like, and executes the programs.

For example, the CPU 10 takes in and decodes instructions of an application program one after another, and executes the contents, calculation, data transfer, control, and the like. In the embodiment, the CPU 10 reads a program for enlarging and displaying characters, other application programs, and data from the memory 11 and the secondary storage unit 15, and executes a process for enlarging and displaying characters. Thus, the CPU 10 implements overall control of the smart phone 1 and control functions of enlarging and displaying characters that are installed on the smart phone 1.

The touch panel 12 has a sensor installed, with which contact of an operating object, such as a finger of a user or a touch pen, can be detected on a touch surface, and has a function to have data input in response to a user operation. The touch panel 12 also has a function to display a desired object on a display such as an LCD (liquid crystal display). In the embodiment, when a user performs an operation contacting the touch surface of the touch panel by a finger, a string specified by the operation is enlarged and displayed. Examples of the sensor includes a pressure sensor, an electrostatic capacitance sensor, and an optical sensor. However, the sensor installed in the touch panel 12 may be any other sensor as long as it can detect contact and non-contact between the operating object and the touch surface.

The camera 13 includes a lens and an imaging element to capture images of printed materials and documents having objects printed, and takes in the image data. The operational button 14 is a button provided for executing a predetermined function of the smart phone 1; examples may include a power button to turn on/off the power, and a button to return to a previously displayed image (also referred to as a "back button", below).

The secondary storage unit 15 may be constituted with a storage device such as an EEPROM, a flash memory, and an HDD (Hard Disk Drive). The secondary storage unit 15 stores control programs and an OS program executed by the CPU 10, and application programs with which the CPU 10 executes various functions provided by the smart phone 1.

The communication I/F 16 is an interface to communicate with an external apparatus via a communication network. The communication I/F 16 connects to various communication terminals via the communication network, to implement reception/transmission of data between the smart phone 1 and the communication terminals. The communication I/F 16 may also function as an interface to transmit and receive electronic mail data and the like, with other apparatuses via a cellular phone communication channel network.

The wireless communication I/F 17 is an interface to execute wireless communication with an external apparatus. For example, the wireless communication I/F 17 is an interface to implement one of wireless communication protocols among infrared communication such as IrDA and IrSS, Bluetooth (trademark) communication, Wi-Fi (trademark) communication, and contactless IC cards.

The external I/F 18 is an interface to have the smart phone 1 connect with an external apparatus. For example, the external I/F 18 is implemented by a socket to have an external recording medium (a memory card or the like) inserted, an HDMI (High Definition Multimedia Interface) (trademark) terminal, a USB (Universal Serial Bus) terminal, or the like. In this case, the CPU 10 transmits and receives data with an external apparatus via the external I/F 18.

The sound input/output I/F 19 is an interface to output sound data processed by the smart phone 1, and implemented by, for example, a loudspeaker, a headphone terminal, or a headphone. The sound input/output I/F 19 is also an interface to input sound generated outside of the smart phone 1, and implemented by, for example, a microphone.

[Example of functional configuration]

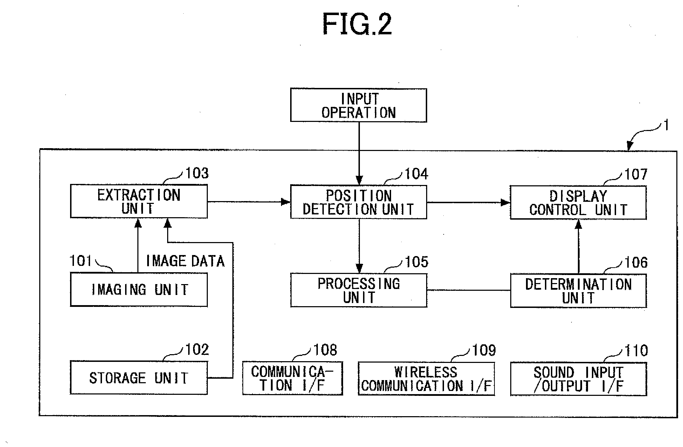

Next, a functional configuration of the terminal device according to an embodiment in the disclosure will be described with reference to FIG. 2. FIG. 2 is a diagram that illustrates an example of a functional configuration of the terminal device according to an embodiment. In the following, an example of functions will be described by taking the smart phone 1 as an example.

The smart phone 1 according to an embodiment includes an imaging unit 101, a storage unit 102, an extraction unit 103, a position detection unit 104, a processing unit 105, a determination unit 106, a display control unit 107, a communication I/F 108, a wireless communication I/F 109, and a sound input/output I/F 110.

The imaging unit 101 takes in image data that captures a document or the like. The imaging unit 101 is implemented by, for example, the camera 13.

The storage unit 102 stores image data that have been taken in, various programs, and various data items. The storage unit 102 stores a first threshold and a second threshold that have been set in advance as will be described later. The storage unit 102 is implemented by, for example, the memory 11 and the secondary storage unit 15.

The extraction unit 103 extracts strings from a character area included in image data by units of lines.

The position detection unit 104 detects contact on the touch surface by an operating object, and release of contact on the touch surface by an operating object (release of a finger or the like). The position detection unit 104 is implemented by, for example, a sensor installed in the touch panel 12.

The processing unit 105 calculates, based on detected contact on the touch surface, coordinates (x, y) of a touch position of an operating object, and calculates the moving direction and the moved distance of the operating object.

The determination unit 106 determines whether there is a line following a line specified by a touch position of the operating object.

The display control unit 107 enlarges and displays a string at and around the touch position in the line specified by the operating object among strings extracted by units of lines. In a predetermined case, which will be described later, the display control unit 107 enlarges and displays a string at and around the head of the next line or the previous line. Functions of the processing unit 105, the determination unit 106, and the display control unit 107 are implemented by the CPU 10.

The communication I/F 108 transmits and receives information with an external apparatus. The wireless communication I/F 109 executes wireless communication with an external apparatus. The sound input/output I/F 110 inputs and outputs sound data.

So far, as an example of the terminal device according to an embodiment, the hardware configuration and the functional configuration of the smart phone 1 have been described. Next, a process for enlarging and displaying characters will be described according to the first to third embodiments in order.

<First embodiment>

[Operations of smart phone (process for enlarging and displaying characters)]

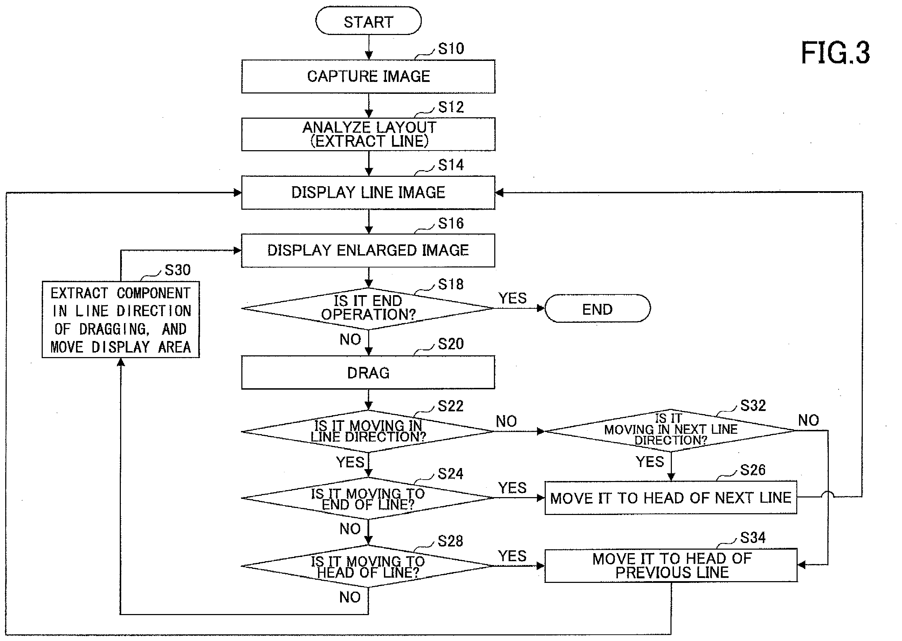

An example of a process for enlarging and displaying characters executed by the smart phone 1 according to the first embodiment will be described with reference to FIG. 3. FIG. 3 is a flowchart that illustrates an example of the process for enlarging and displaying characters according to the first embodiment.

Note that if the direction of strings included in image data is less than ±45 degrees with respect to the horizontal direction of the screen, it is determined that the strings are written in lateral writing. In this case, the horizontal direction (lateral direction) of the screen is taken as the first axis, and the vertical direction (longitudinal direction) of the screen is taken as the second axis. If the direction of strings included in image data is less than ±45 degrees with respect to the vertical direction of the screen, it is determined that the strings are written in vertical writing. In this case, the vertical direction (longitudinal direction) of the screen is taken as the first axis, and the horizontal direction (lateral direction) of the screen is taken as the second axis. The following description assumes lateral writing with which the horizontal direction of the screen is taken as the first axis (line direction), and the vertical direction of the screen is taken as the second axis.

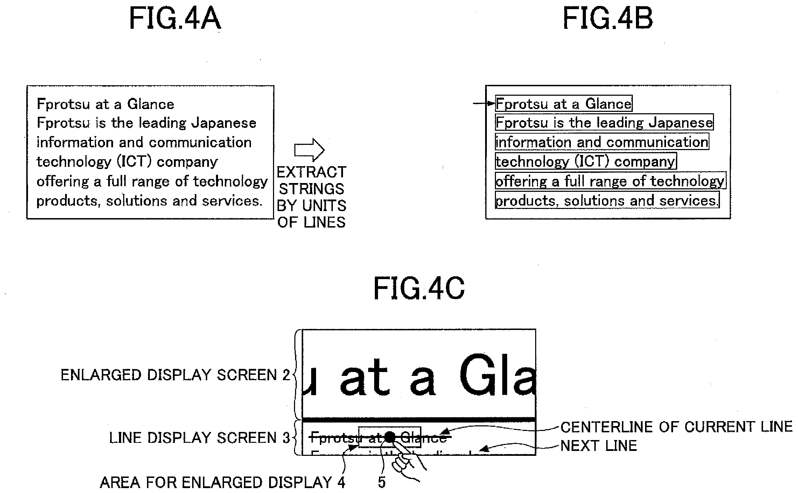

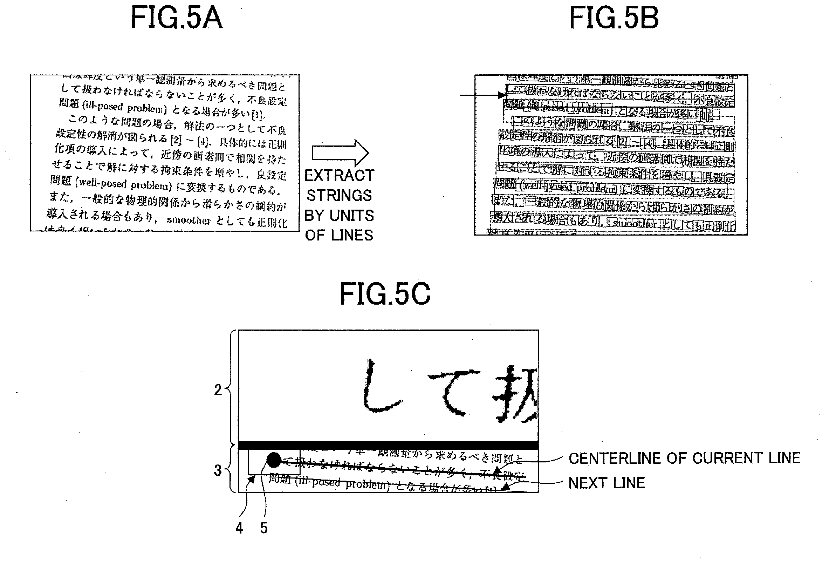

Once a process for enlarging and displaying characters according to the first embodiment is started, the imaging unit 101 captures an image of a document or the like, and takes image data that includes characters in the smart phone 1 (Step S10). FIG. 4A and FIG. 5A are examples of image data obtained by the smart phone 1, by capturing a document in English and a document in Japanese printed on paper media, respectively.

Next, the extraction unit 103 analyzes the layout of the obtained image data, and extracts strings from the character area included in the image data by units of lines (Step S12). For example, by using an optical character recognition (OCR) technology, the extraction unit 103 executes a process for analyzing layout, executes extraction of the line direction, and executes extraction of strings by units of lines. At this moment, the extraction unit 103 extracts not only one line but also multiple lines, and determines order of lines from the positional relationship between the lines. Even for image data in which charts and strings coexist, the extraction unit 103 executes the process for analyzing layout to automatically separate the charts and the strings, and to extract only the strings by units of lines. FIG. 4B and FIG. 5B illustrate examples of states in which strings are extracted from image data by units of lines, respectively. Strings in respective frames are strings extracted by units of lines. The extraction unit 103 extracts character sizes and character intervals, and estimates the line direction (vertical writing or lateral writing) with reference to the character sizes and the character intervals. Based on the estimated line direction, the extraction unit 103 extracts centerlines of the lines, and coordinates of two endpoints of each of the centerlines.

Note that image data whose layout is analyzed by the extraction unit 103 may not be image data captured by the imaging unit 101. For example, it may be image data stored in the smart phone 1. In this case, at Step S10, instead of capturing an image, image data is read from the secondary storage unit 15.

When a finger of a user touches the touch surface, the display control unit 107 displays a line specified by the touch position (Step S14).

For example, in FIG. 4C and FIG. 5C, examples of screens on the touch panel 12 are illustrated. In these examples, the screen of the touch panel 12 is partitioned into top and bottom areas. On a line display screen 3, a part of image data along and around the specified line is displayed. More specifically, on the line display screen 3, the centerline of the line currently specified, a part of the next line (and/or the previous line), an area of a string that is to be enlarged and displayed (an area for enlarged display 4) on an enlarged display screen 2, and a drag button 5 are displayed.

Referring to FIG. 3 again, when the user touches the drag button 5 by a finger to operate on the drag button 5, the display control unit 107 displays an enlarged image of a string at and around the position specified in the specified line (Step S16). In the following, a touch operation by the user by a finger on the drag button 5 displayed on the line display screen 3, and an operation of moving the finger while keeping the contact on the drag button 5, may be together referred to as dragging.

For example, on the enlarged display screens 2 in FIG. 4C and FIG. 5C, the strings in the area for enlarged display 4 specified in the line display screens 3 are displayed, respectively. In other words, on the enlarged display screens 2, the enlarged strings at and around the positions specified by the drag button 5 are displayed.

Referring to FIG. 3 again, next, the determination unit 106 determines whether an end operation has been performed (Step S18). For example, when the user presses a back button (not illustrated), the determination unit 106 determines that an end operation has been performed, and ends the process. If the back button is not pressed, the determination unit 106 determines that an end operation has not been performed, and the position detection unit 104 detects movement of the position of the drag button 5 (touch position) in response to a dragging operation by the user (Step S20).

Based on the detected position of the drag button 5, the determination unit 106 determines whether the drag button 5 is moving in the line direction (Step S22). If having determined that the drag button 5 is moving in the line direction, the determination unit 106 determines whether the drag button 5 has moved to the end of the specified line (Step S24). At this moment, the determination unit 106 determines whether it is the end of the line, based on the coordinates of the two endpoints of the centerline of the line extracted by the extraction unit 103.

If having determined at Step S24 that the drag button 5 is not moving in the line direction, the determination unit 106 determines whether the drag button 5 has moved to the head of the specified line (Step S28). At this moment, the determination unit 106 determines whether it is the head of the line, based on the coordinates of the two endpoints of the centerline of the line extracted by the extraction unit 103. If the determination unit 106 has determined that the drag button 5 has not moved to the head of the line, the display control unit 107 extracts the component in the line direction when the finger of the user has moved the drag button 5. The display control unit 107 moves the display area of the string displayed on the enlarged display screen 2, by the amount of the extracted component in the line direction along the centerline of the line (Step S30).

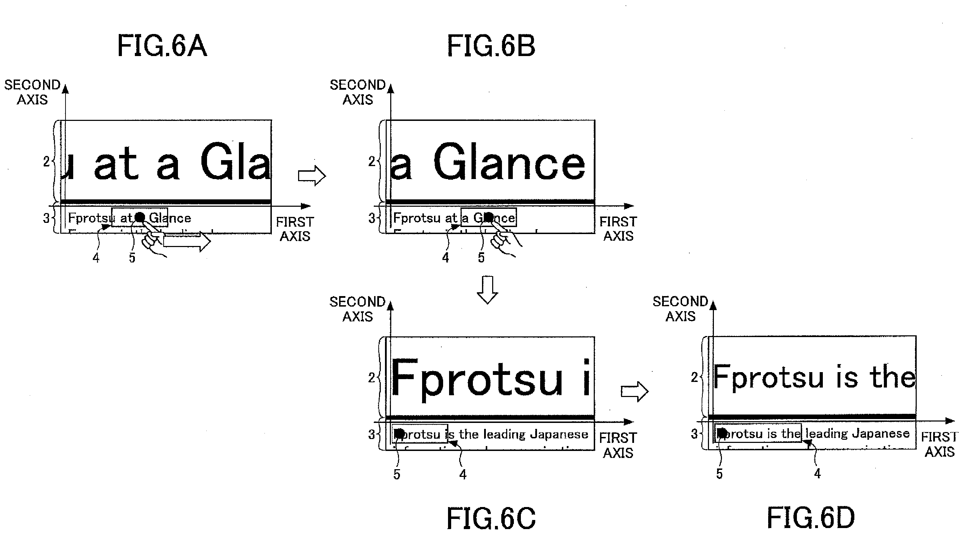

For example, in FIG. 6A, the drag button 5 is displayed at a position a bit preceding the center of the line display screen 3. From this state, the user moves the drag button 5 in the line direction from left to right. In response to the movement of the drag button 5, the string enlarged and displayed on the enlarged display screen 2 shifts from a string in the area for enlarged display 4 illustrated in FIG. 6A to a string in the area for enlarged display 4 illustrated in FIG. 6B.

Referring to FIG. 3 again, the display control unit 107 enlarges and displays the string at and around the position of the drag button 5 (the area for enlarged display 4) after the movement (Step S16). Next, the determination unit 106 determines again whether an end operation has been performed (Step S18). If the back button is not pressed, the position detection unit 104 detects coordinates of the position of the drag button 5 (touch position) again (Step S20).

Next, based on the detected position of the drag button 5, the determination unit 106 determines whether the drag button 5 is moving in the line direction (Step S22).

As in a case where the position of the drag button 5 is moved in the direction of the second axis in FIG. 6, if the drag button 5 is moving in a direction clearly orthogonal to the line direction, the determination unit 106 may determine that the drag button 5 is not moving in the line direction, or may determine that the drag button 5 is moving in the line direction if the drag button 5 moves in any other directions. If having determined that the drag button 5 is moving in the line direction, the determination unit 106 can set the string to be enlarged and displayed, by separating the movement of the position of the drag button 5 into the component of the first axis and the component of the second axis, and moving the drag button 5 by the amount of the component of the first axis (namely, the component in the line direction). In other words, the display control unit 107 moves the drag button 5 on the line display screen 3 by the amount of the component of the first axis along the centerline of the line. Accordingly, the string enlarged and displayed on the enlarged display screen 2 changes. Thus, the user can read the enlarged strings on the specified line smoothly in the line direction, without precisely tracing the drag button 5 along the centerline of the line. Note that also for vertical writing, the display control unit 107 similarly separates the movement of the position of the drag button 5 into the component of the first axis and the component of the second axis, and moves the drag button 5 by the amount of the component of the first axis (namely, the vertical direction (longitudinal direction) of the screen). Thus, the user can read the enlarged strings on the specified line smoothly in the line direction.

If having determined at Step S22 that the drag button 5 is not moving in the line direction, the determination unit 106 determines whether the drag button 5 is moving in a direction towards the line next to the specified line (Step S32). For example, if the drag button 5 is moving in the vertical direction of the screen, or if the moving direction of the drag button 5 is less than ±45 degrees with respect to the vertical direction of the screen, the determination unit 106 may determine that the drag button 5 is not moving in the line direction. At Step S32, if having determined that the drag button 5 is moving in a direction towards the next line, the display control unit 107 moves the head of the position displayed on the screen to the head of the next line (Step S26), displays the next line on the line display screen 3 (Step S14), and displays the head of the next line on the enlarged display screen 2 (Step S16). Consequently, as illustrated in FIG. 6C, the next line is displayed on the line display screen 3, and the string specified in the area for enlarged display 4 on the line display screen 3, namely, the string at and around the head of the next line is displayed on the enlarged display screen 2.

On the other hand, if the determination unit 106 has determined at Step S32 that the drag button 5 is not moving in a direction towards the next line, the display control unit 107 moves the head of the position displayed on the screen to the head of the previous line (Step S26), displays the previous line on the line display screen 3 (Step S14), and displays the head of the previous line on the enlarged display screen 2 (Step S16).

Here, a case will be described in which, based on the position of the drag button 5 detected when an end operation is not executed (Step S20), it is determined at Step S22 that the drag button 5 is moving in the line direction, to be moved to the end of the specified line at Step S24. This corresponds to a case, for example, in which the drag button 5 illustrated in FIG. 6A has moved to the end of the line. In this case, the process goes forward to Step S26, and the display control unit 107 moves the head of the position displayed on the screen to the head of the next line, displays the next line on the line display screen 3 (Step S14), and displays the head of the next line on the enlarged display screen 2 (Step S16). Thus, by having the drag button 5 move automatically to the next line, the enlarging and displaying can be securely moved to the head of the next line. Thus, the user can read the enlarged line next to the specified line smoothly.

Next, a case will be described in which, based on the detected position of the drag button 5 (Step S20), it is determined that the drag button 5 has moved in the line direction (Step S22), not to the end of the specified line, but to the head of the line (Steps S24 and S28). This corresponds to a case, for example, in which the drag button 5 illustrated in FIG. 6A has moved in a direction reverse to an arrow illustrated in FIG. 6A, to reach the head of the line. In this case, the process goes forward to Step S34, and the display control unit 107 moves the head of the position displayed on the screen to the head of the previous line, displays the previous line on the line display screen 3 (Step S14), and displays the head of the previous line on the enlarged display screen 2 (Step S16). Thus, by having the drag button 5 move automatically to the previous line, the enlarging and displaying can be securely moved to the head of the previous line. Thus, the user can go back and read the enlarged line previous to the specified line smoothly.

As described above, depending on the position of the drag button 5 detected at Step S20, at least one of sequences including Steps S22 to S34 is executed in each repetition. Consequently, the entire string on the specified line is displayed on the line display screen 3 at Step S14. At the same time, the string at and around the specify position in the specified line is enlarged and displayed on the enlarged display screen 2 at Step S16. Thus, the user can have the specified line enlarged to read it smoothly. So far, an example of the process for enlarging and displaying characters executed by the smart phone 1 according to the first embodiment has been described.

[Examples of effects]

Specifying a position by a touch operation or the like on a screen has lower precision compared to specifying a position by using a mouse. Therefore, if a character area to be enlarged is specified by a touch operation or the like on a screen, not a character part that the user desires to view, but another part in the neighborhood may be enlarged and displayed.

In contrast to this, by the process for enlarging and displaying characters according to the first embodiment, specifying a position at which a string is enlarged and displayed can be done easily. Specifically, in the embodiment, strings are extracted from a character area included in image data by units of lines, by layout analysis of a document. Next, the centerlines of the extracted lines and the points at both ends are calculated, and the area for enlarged display is moved along the centerline. Thus, even if a character area to be enlarged and displayed is specified in an imprecise way due to shake of an operational finger, it is possible to stably enlarge and display the specified position on the specified line, just by moving the finger along the line direction on the line display screen 3.

Also, by the process for enlarging and displaying characters according to the embodiment, after having a line that has been read through, the head of the next line is enlarged and displayed automatically. It is the same for a case where the user wants to go back to the previous line. Therefore, the user does not need to search for the head of the next line or the previous line on the screen. Also in this regard, specifying a position at which a string is enlarged and displayed can be done easily.

Further, the process for enlarging and displaying characters according to the embodiment can display a string at a location at which enlargement is desired, promptly without an error. For example, in a case where character recognition is applied to a document printed on a paper medium by an OCR to enlarge and display character codes on a screen, erroneous recognition of characters may occur at the location to be enlarged, which makes it difficult to display the characters 100% correctly. Also, character recognition by OCR takes time because the process requires two stages, extracting strings in lines in image data, and recognizing the characters in the strings in the extracted lines. In contrast to this, the process for enlarging and displaying characters according to the embodiment does not recognize characters at the locations to be enlarged in the lines by units of characters, but recognizes strings by units of lines. Therefore, it is possible to enlarge and display characters at the locations to be enlarged without an error. Also, since the process for enlarging and displaying characters according to the embodiment executes enlarging and displaying characters by units of lines, the processing time can be shortened compared to the case where enlarging and displaying characters are executed by units of characters, and the enlarging and displaying can be executed faster. Thus, a response time to have a specified string enlarged and displayed is faster. Therefore, it is possible even for a farsighted or weak-sighted user to read a document by using the smart phone 1 more smoothly.

(Displaying by units of words)

For a language that puts spaces between words, such as English, enlarging and displaying can be controlled by units of words in a specified line. In this case, a string at and around the specified position is enlarged and displayed by units of words. Specifically, when the position of the drag button 5 has moved, with respect to the middle point between the center position of a previous word and the center position of a next word, towards the next word, the display control unit 107 may have the entire next word enlarged and displayed.

By this way, as illustrated in FIG. 6D, an enlarged string is displayed by units of words. Thus, a word is not displayed in a state in which the word is cut in the middle as illustrated in FIG. 6C. Therefore, a string can be enlarged and displayed in a state that is easier for the user to recognize. Consequently, the enlargement ratio of the display may become smaller depending on a word. For example, a longer word is displayed by an enlargement ratio smaller than that for a shorter word, to be contained in the screen. Thus, a word is not displayed in a state in which the word is cut in the middle, and the string can be displayed in a state that is easier to recognize.

<Second embodiment>

[Operations of smart phone (process for enlarging and displaying characters)]

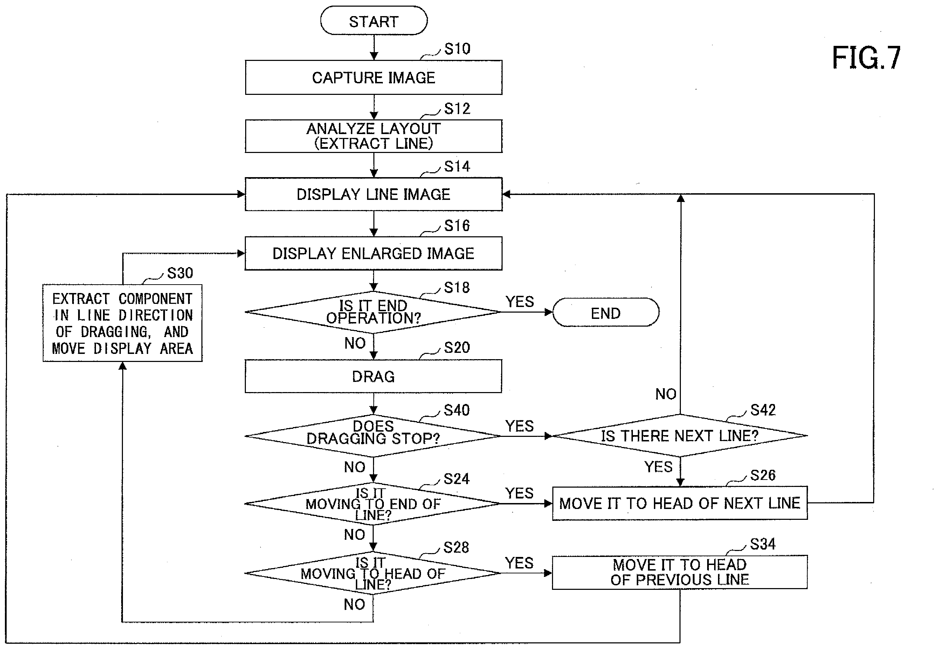

Next, an example of a process for enlarging and displaying characters executed by a smart phone 1 according to a second embodiment will be described with reference to FIG. 7. FIG. 7 is a flowchart that illustrates an example of the process for enlarging and displaying characters according to the second embodiment. Among steps illustrated in FIG. 7, steps that execute the same processing as the steps in the process for enlarging and displaying characters according to the first embodiment illustrated in FIG. 3 are designated by the same step numbers as in FIG. 3. Therefore, in the following, steps having different step numbers from those in FIG. 3 are mainly described for the process for enlarging and displaying characters according to the second embodiment, to avoid duplicated description with respect to the first embodiment.

Once a process for enlarging and displaying characters according to the second embodiment is started, an image is captured, strings are extracted by units of lines by layout analysis of image data, the string on a specified line is displayed, and the string around the specified position is enlarged and displayed (Steps S10 to S16). Also, while the operation button is not pressed (Step S18), the position detection unit 104 detects coordinates of a position of the drag button 5 (touch position) (Step S20).

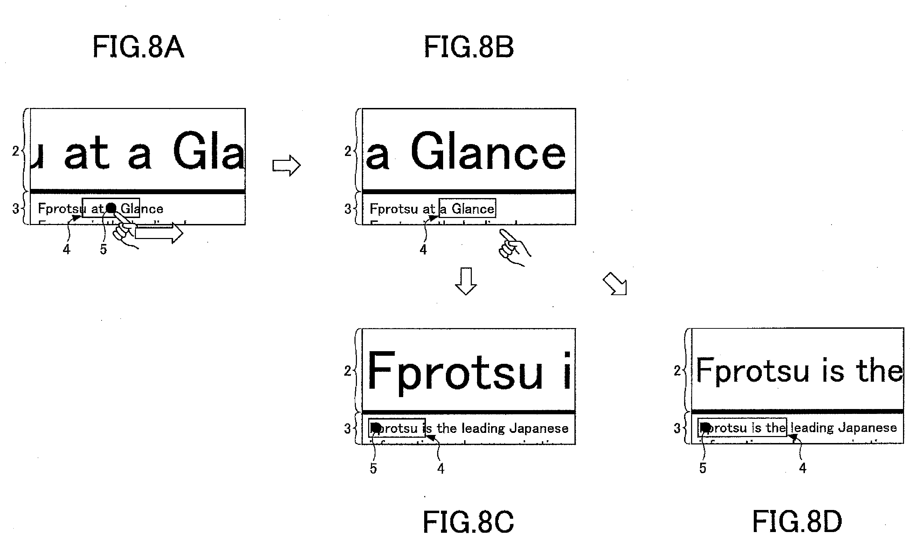

Next, based on the detected position of the drag button 5, the determination unit 106 determines whether the dragging operation has ended (Step S40). If having determined that the dragging operation has ended, the determination unit 106 determines whether there is a line next to the specified line (Step S42). If there is a next line, the display control unit 107 moves the head of the position displayed on the screen to the head of the next line (Step S26), displays the next line on the line display screen 3 (Step S14), and displays the head of the next line on the enlarged display screen 2 (Step S16). For example, when the finger is detached from the drag button 5 as illustrated in FIG. 8B, the next line is automatically displayed on the line display screen 3, and a string at and around the head of the next line is automatically displayed on the enlarged display screen 2 as illustrated in FIG. 8C.

If it has been determined that the operational finger has moved to the end or head of the line (Step S24 or S28), the string to be enlarged and displayed is automatically shifted to the head of the next line or the previous line (Steps S26 or S34, S16, and S18) in the same way as in the first embodiment. Also, steps to move the string to be enlarged and displayed depending on movement of the operational finger (Steps S30, S16, and S18) are the same as in the first embodiment. Therefore, description is omitted for these steps. So far, an example of the process for enlarging and displaying characters executed by the smart phone 1 according to the second embodiment has been described.

Note that if having determined that there is a line next to the specified line, the determination unit 106 may separate a position specified after the previous specification of the position has been released, into a position on the first axis that represents the line direction, and a position on the second axis orthogonal to the first axis, to determine whether the position on the first axis is within a predetermined range from the head of the next line. If having determined that there is a line next to the specified line, the determination unit 106 may determine whether a position specified after the previous specification of the position has been released is within the predetermined range from the head of the next line. If the determination unit 106 has determined that the specified position is within the predetermined range from the head of the next line, the display control unit 107 may enlarge and display the string at and around the head of the next line.

[Examples of effects]

Specifying a position by a touch operation or the like on a screen has lower precision compared to specifying a position by using a mouse. Therefore, if the user wants to enlarge and display a line that is next to a line that has been enlarged and displayed, it may be difficult to specify the head of the next line. It is especially difficult to specify the head of the next line for strings if the line spacing is dense. In this case, if a finger of the user to specify the position shakes up and down with respect to the position of the next line, a character part at a shifted position that is different from the head of the next line is enlarged and displayed, which makes it difficult for the user to have characters on the desired line enlarged, and hinders the user from reading the document smoothly by using the smart phone 1.

In contrast to this, by the process for enlarging and displaying characters according to the second embodiment, the head position of an adjacent line can be easily specified for enlarging and displaying strings.

Specifically, by the process for enlarging and displaying characters according to the embodiment, strings are extracted from the screen by units of lines, and it is determined which of the lines corresponds to the part specified by the user to be enlarged. Then, in the embodiment, once it is determined that that specifying the line has completed, when determining an object to be enlarged and displayed next, a string to be enlarged and displayed can be determined from the next line even if a position specified by a finger of the user or the like to be enlarged is not at the position of the next line.

In other words, for example, in the embodiment, if the operational finger is detached from the screen, the string to be enlarged and displayed is automatically controlled to move to the head of the next line or the previous line automatically. Therefore, the user does not need to search for the head of the desired line on the screen, to specify the head of the desired line on the touch screen.

Also, in the embodiment, the same effects can be obtained that have been described by examples of effects in the first embodiment.

Note that an operation to release the specification of the position is not limited to a detaching operation of a finger from the screen. For example, when an operation is performed that moves a finger in a direction reverse to the moving direction, it may be determined that the specification of the position is released, and in the same way as the finger is detached from the screen in the above embodiment, the string to be enlarged and displayed may be automatically moved to the head of the next line.

(Displaying by units of words)

As done in the first embodiment, the display control unit 107 may enlarge and display the string at and around the specified position by units of words. By this way, while the finger is being moved along the line direction, a string enlarged by units of words is displayed on the enlarged display screen 2. For example, in FIG. 8C, a string is enlarged and displayed by units of pixels on the enlarged display screen 2; whereas in FIG. 8D, the string is enlarged and displayed by units of words. Thus, a word is not displayed in a state in which the word is cut in the middle, and the string can be displayed in a state that is easier to recognize.

<Third embodiment>

[Operations of smart phone (process for enlarging and displaying characters)]

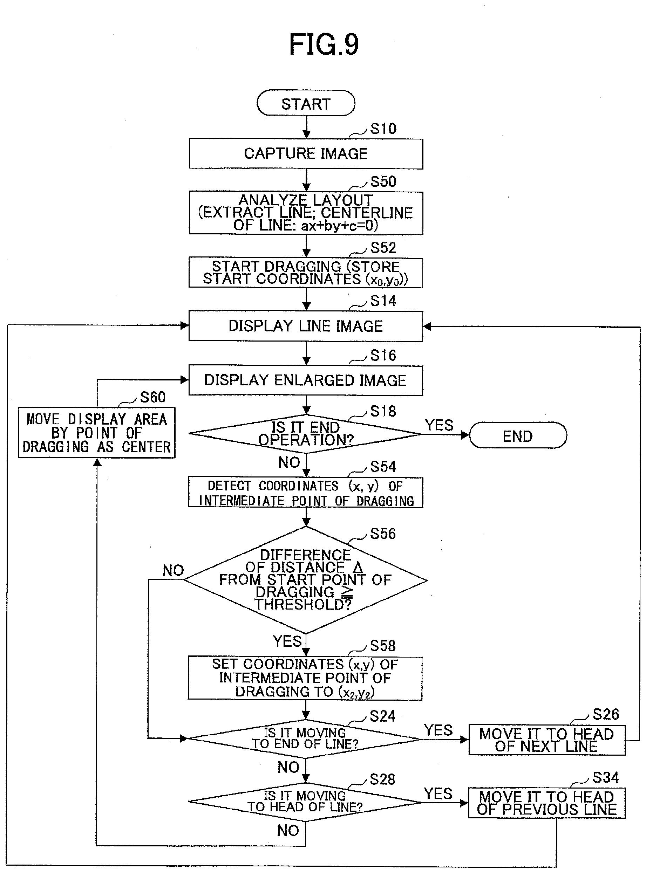

Next, an example of a process for enlarging and displaying characters executed by a smart phone 1 according to a third embodiment will be described with reference to FIG. 9. FIG. 9 is a flowchart that illustrates an example of the process for enlarging and displaying characters according to the third embodiment. Among steps illustrated in FIG. 9, steps that execute the same processing as the steps in the process for enlarging and displaying characters according to the first embodiment illustrated in FIG. 3 are designated by the same step numbers as in FIG. 3. Therefore, in the following, steps having different step numbers from those in FIG. 3 are mainly described for the process for enlarging and displaying characters according to the third embodiment, to avoid duplicated description with respect to the first embodiment.

Once a process for enlarging and displaying characters according to the second embodiment is started, an image is captured (Step S10), and then, the extraction unit 103 extracts strings in image data by units of lines by layout analysis, and extracts the centerline of each line (ax+by+c=0) (Step S50). Next, when the user starts dragging, the position detection unit 104 stores coordinates of the start position of the drag button 5 in the storage unit 102 (Step S52). In the following, the coordinates of the start position of the drag button 5 are denoted as the start point of dragging $(x_0, y_0)$.

Next, the display control unit 107 displays the specified line on the line display screen 3 (Step S14), and enlarges and displays the string around the drag button 5 on the enlarged display screen 2 (Step S16). Next, if the back button is not pressed, the determination unit 106 determines that an end operation has not been performed (Step S18). In this case, the position detection unit 104 detects the coordinates of the drag button 5 on the move (Step S54). In the following, the coordinates of the drag button 5 on the move are denoted as the intermediate point of dragging $(x_1, y_1)$.

Next, the processing unit 105 calculates a difference of the distance $\Delta$ from the start point of dragging $(x_0, y_0)$ to the intermediate point of dragging $(x, y)$, and the determination unit 106 determines whether the calculated difference of the distance $\Delta$ is greater than or equal to a predetermined threshold (Step S56).

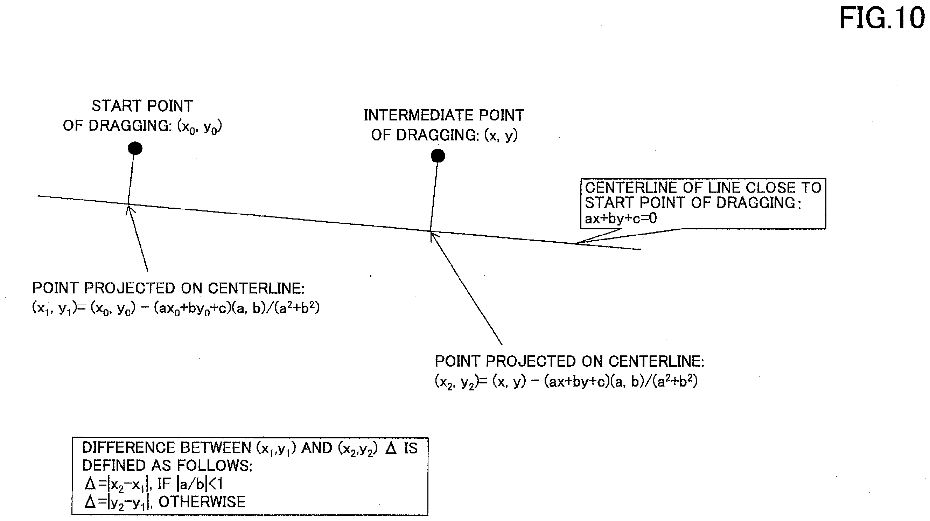

A calculation method of this difference of the distance $\Delta$ will be described with reference to FIG. 10. In FIG. 10, examples of a start point of dragging $(x_0, y_0)$, an intermediate point of dragging $(x, y)$, and the centerline of a line (ax+by+c=0) that is the closest to the start point of dragging $(x_0, y_0)$, are illustrated.

A point $(x_1, y_1)$, which is a projection of the start point of dragging $(x_0, y_0)$ on the centerline, is represented by the following formula (1) .

$$(x_1, y_1) = (x_0, y_0) - (ax_0 + by_0 + c)(a, b)/(a^2 + b^2) \quad \cdot\cdot(1)$$

A point $(x_2, y_2)$, which is a projection of the intermediate point of dragging $(x, y)$ on the centerline, is represented by the following formula (2) .

$$(x_2, y_2) = (x, y) - (ax + by + c)(a, b)/(a^2 + b^2) \quad \cdot\cdot(2)$$

The difference of the distance $\Delta$ between the point $(x_1, y_1)$ being the projection of the start point of dragging $(x_0, y_0)$, and the point $(x_2, y_2)$ being the projection of the intermediate point of dragging $(x, y)$ on the centerline is defined as follows.

$$\text{Difference } \Delta = |x_2 - x_1|, \text{ if } |a/b| < 1,$$

or

$$\text{Difference } \Delta = |y_2 - y_1|, \text{ if } |a/b| \geq 1$$

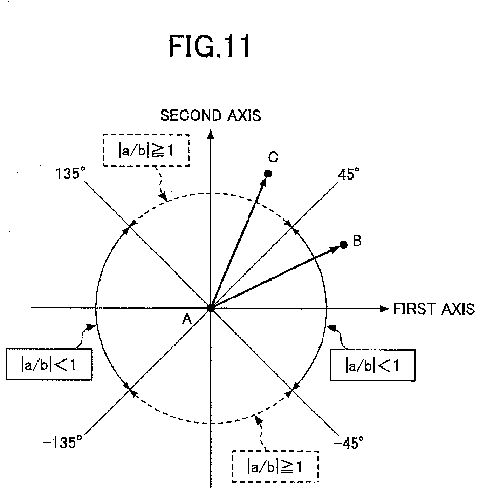

The slope of the centerline (ax+by+c=0) is represented by "-a/b" because y=-a/b·x-c/b. As illustrated in FIG. 11, if the slope of the centerline is less than $\pm 45$ degrees with respect to the horizontal direction (the first axis) of the screen, $|a/b|<1$ is satisfied. In other words, as in a case where the drag button 5 is dragged from a position A to a position B, if the movement of the drag button 5 is separated into the component of the first axis and the component of the second axis, the component of the first axis is greater than the component of the second axis. In this way, if $|a/b|<1$ is satisfied, the processing unit 105 calculates the difference of the distance $\Delta$ when the drag button 5 moves in the first axis direction, by using the formula of the difference of the distance $\Delta=|x_2-x_1|$.

On the other hand, if the slope of the centerline is less than $\pm45$ degrees with respect to the vertical direction (the second axis) of the screen, $|a/b|\geq1$ is satisfied. In other words, as in a case where the drag button 5 is dragged from a position A to a position C, the component of the second axis by the movement of the drag button 5 is greater than the component of the first axis. In this way, if $|a/b|\geq1$ is satisfied, the processing unit 105 calculates the difference of the distance $\Delta$ when the drag button 5 moves in the second axis direction by using the formula of the difference of the distance $\Delta=|y_2-y_1|$.

Referring to FIG. 9 again, the determination unit 106 determines whether the calculated difference of the distance $\Delta$ is greater than or equal to the predetermined threshold (Step S56). If the determination unit 106 has determined that the calculated difference of the distance $\Delta$ is greater than or equal to the predetermined threshold, the display control unit 107 takes coordinates of the point $(x_2, y_2)$ being the projection of the intermediate point of dragging $(x, y)$ on the centerline, as the coordinates of the intermediate point of dragging, and enlarges and displays a string at and around the position of the drag button 5.

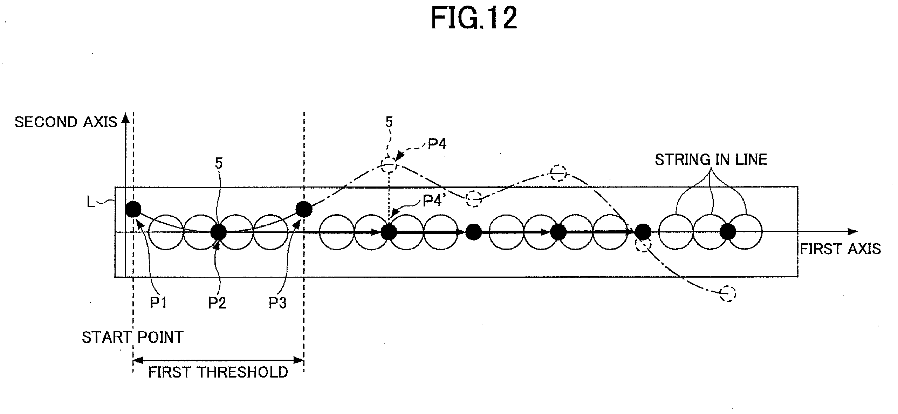

For example, if $|a/b|<1$ is satisfied, the amount of movement from the start point of dragging to the intermediate point of dragging is defined by the difference $\Delta=|x_2-x_1|$ in the first axis direction. The determination unit 106 determines whether the calculated difference of the distance $\Delta(=|x_2-x_1|)$ is greater than or equal to the predetermined first threshold (Step S56). If the determination unit 106 has determined that the calculated difference of the distance $\Delta(=|x_2-x_1|)$ is greater than or equal to the predetermined first threshold, the display control unit 107 moves the drag button 5 in the first axis direction by an amount of the difference of the distance $\Delta(=|x_2-x_1|)$ from the start point of dragging of the drag button 5 in the first axis direction, and enlarges and displays a string at and around the intermediate point of dragging at which the drag button 5 is positioned. For example, in FIG. 12, a case is illustrated in which $|a/b|<1$ is satisfied, and the difference of the distance $\Delta$ in the first axis direction from the start point of dragging P1 to the intermediate point of dragging P3 becomes the first threshold. In this case, based on the x coordinate of the point $(x_2, y_2)$ which is a projection of the intermediate point of dragging $(x, y)$ on the centerline in FIG. 10, the display control unit 107 moves the area for enlarged display in the first axis direction depending on the difference $\Delta (=|x_2-x_1|)$ until the specification of the position is released (Step S60). After that, even if the position of the drag button 5 is moved to a position at which $|a/b|<1$ is not satisfied (for example, a point P4 in FIG. 12), the display control unit 107 moves the area for enlarged display in the first axis direction, based on the x coordinate of the point $(x_2, y_2)$, depending on the difference $\Delta(=|x_2-x_1|)$ until the specification of the position is released.

Thus, even if a dragging operation by the user shakes as illustrated in in FIG. 12 by a dashed line, for the dragging operation that has already had the movement by the first threshold or greater, only the component in the first axis direction is effective. For example, even if the position of the drag button 5 is located at the point P4, a string at and around the position of a point P4' is enlarged and displayed. Thus, a string at and around a position on the first axis is enlarged and displayed. Therefore, by the process for enlarging and displaying according to the embodiment, area movement along a line can be stabilized with respect to a user operation, and erroneous enlarging and displaying can be reduced.

Note that as examples of timing when the specification of the position is released, timing when the drag button 5 on the screen is positioned at the end or head of a specified line as illustrated in Step S24 or S28 in FIG. 9, may be considered. As another example, though not illustrated in FIG. 9, when the finger is released from the drag button 5 on the screen, it may be determined that the specification of the position is released. Also, while having the finger contact the drag button 5 on the screen, and sliding the finger along in the line direction, if an operation is performed that moves the finger in a direction reverse to the moving direction, it may be determined that the specification of the position is released.

After execution of Step S60 in FIG. 9, the display control unit 107 enlarges and displays a string at and around the position of the intermediate point of dragging on the first axis (Step S16). While the back button is not pressed (Step S18), depending on the position of the intermediate point of dragging detected at Step S54, Steps S56 and after are executed repeatedly.

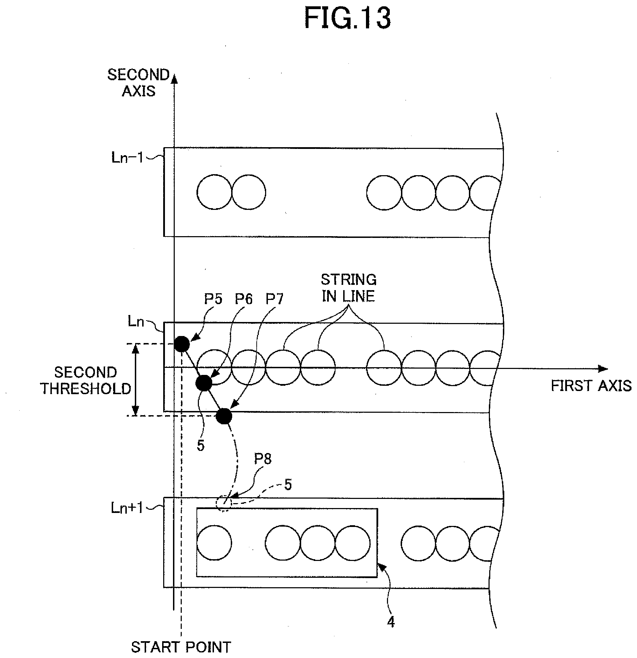

On the other hand, if $|a/b|\geq1$ is satisfied, the amount of movement from the start point of dragging to the intermediate point of dragging is defined by the difference $\Delta=|y2-y1|$ in the second axis direction (the direction orthogonal to the line direction). The determination unit 106 determines whether the calculated difference of the distance $\Delta (=|y2-y1|)$ is greater than or equal to the predetermined first threshold (Step S56). If the determination unit 106 has determined that the calculated difference of the distance $\Delta(=|y2-y1|)$ is greater than or equal to the predetermined second threshold, the display control unit 107 moves the drag button 5 in the second axis direction by an amount of the difference of the distance $\Delta(=|y2-y1|)$, determines a line at or around the moved position, and enlarges and displays a string at and around the head of the determined line. For example, in FIG. 13, a case is illustrated in which $|a/b| \geq 1$ is satisfied, and it is determined whether the difference of the distance $\Delta$ in the second axis direction from the start point of dragging P5 to the intermediate point of dragging P7 is greater than or equal to the second threshold. If it is greater than or equal to the second threshold, based on the y coordinate of the point $(x_2, y_2)$ which is a projection of the intermediate point of dragging $(x, y)$ on the centerline in FIG. 10, the display control unit 107 moves the display area by the length of the difference $\Delta$ in the second axis direction depending on the difference $\Delta = |y2 - y1|$. Then, the display control unit 107 enlarges and displays a string at and around the head of the line at the moved position (Steps S60 and S16). For example, if the drag button 5 is moved to a point P8 in FIG. 13, a string at and around the head of the next line is enlarged and displayed.

Note that if the drag button 5 is moved to the point P8 in FIG. 13, and it is determined that the drag button 5 is within a predetermined range from the head of the next line Ln+1 (for example, within the area for enlarged display 4 from the head of the line Ln+1), a string at and around the head of the next line may be enlarged and displayed.

While the back button is not pressed (Step S18), depending on the position of the intermediate point of dragging detected at Step S54, Steps S14 and after are executed repeatedly. So far, an example of the process for enlarging and displaying characters executed by the smart phone 1 according to the third embodiment has been described.

Note that the determination unit 106 may determine whether the specified position has been moved by the first threshold or greater in the first axis direction that represents the line direction. If the determination unit 106 has determined that the position in the first axis direction has been moved by the first threshold or greater, the display control unit 107 may enlarge and display a string at and around a position in the specified line in the first axis direction until the specification of the position is released.

[Examples of effects]

When displaying strings in dense line spacing, while tracing positions of strings to be enlarged and displayed in a line, the tip of a finger may shake up and down, and a string in the up and down lines may be enlarged and displayed unintentionally.

In contrast to this, by the process for enlarging and displaying characters according to the third embodiment, when strings are enlarged and displayed, erroneous operations of the specification of the position to be enlarged and displayed can be reduced.

Specifically, by the process for enlarging and displaying characters according to the embodiment, string parts are extracted from the screen by units of lines, and based on comparison between the amount of movement of a dragging operation and the first or second threshold, it is determined whether a line to be enlarged and displayed that is specified by the user, is currently being enlarged and displayed. Consequently, if it has been determined that the line is currently being enlarged and displayed, then, displaying is controlled so as not to change the line to be enlarged and displayed even if the position specified to be enlarged and displayed is moved to a part in a line above or below the line currently being enlarged and displayed. Thus, erroneous operations of the specification of the position to be enlarged and displayed due to a shaking finger can be reduced. Also, in the embodiment, the same effects can be obtained that have been described by examples of effects in the first and second embodiments.

(Displaying by units of words)

As done in the first and second embodiments, the display control unit 107 may enlarge and display the string at and around the specified position by units of words. By this way, while a finger is being moved along the line direction, a string enlarged by units of words is displayed on the enlarged display screen 2. Thus, a word is not displayed in a state in which the word is cut in the middle, and the string can be displayed in a state that is easier to recognize.

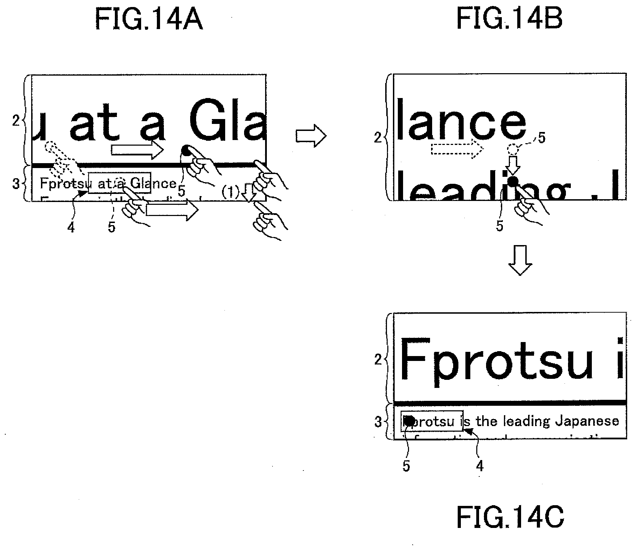

So far, a terminal device, a display control method, and a program have been described with embodiments above. Note that the invention is not limited to the above embodiments, but various modifications and improvements can be made within the scope of the invention. Also, the above embodiments can be combined as long as no inconsistency is introduced. For example, in the above embodiments, the screen is partitioned into two areas to display an entire line in one of the areas, and to enlarge and display a string to be processed in the specified line in the other area. However, the screen may not be partitioned, and a string to be processed in the specified line may be enlarged and displayed in the entire area of a single screen. For example, as illustrated in FIG. 14A, the boundary of partitioned two areas may be touched by a finger, and by having the finger move downwards ((1) in FIG. 14A), a single screen of the enlarged display screen 2 can be obtained as illustrated in FIG. 14B. In this case, the user performs a dragging operation on the enlarged display screen 2. Furthermore, as illustrated in FIG. 14C, the screen may be partitioned again into two areas of the line display screen 3 and the enlarged display screen 2.

Also, as illustrated in FIG. 14A, if partitioned into two screens, a dragging operation may be performed on the line display screen 3, or a dragging operation may be performed on the enlarged display screen 2.

Also, in the above embodiments, although the examples have been described with the drag button 5 displayed so that the specified position can be indicated, the drag button 5 may not be displayed necessarily.

Also, in the above embodiments, although the examples have been described with strings in lateral writing, the process for enlarging and displaying characters according to the disclosure is applicable to strings in vertical writing, namely, strings represented with the first axis in the vertical direction.

[Description of Reference Symbols]

| 1: | smart phone |
|---|---|
| 2: | screen for enlarged display |
| 3: | screen for line display |
| 4: | area for enlarged display |
| 5: | drag button |
| 10: | CPU |
| 11: | memory |
| 12: | touch panel |
| 15: | secondary storage device |
| 101: | imaging unit |
| 102: | storage unit |
| 103: | extraction unit |
| 104: | position detection unit |
| 105: | calculation unit |
| 106: | determination unit |
| 107: | display control unit |

**Claims**

1. A terminal device, comprising:

   an extraction unit (103) configured to extract one or more strings from a character area included in image data by units of lines;
   a determination unit (106) configured to determine whether a position specified in a specified line among the strings extracted by units of lines has been moved by a first threshold or greater in a first axis direction that represents a line direction and to determine, in response to release of the specification of the position, whether there is a line next to the specified line; and
   a display control unit (107) configured, if it has been determined that the specified position has been moved by the first threshold or greater in the first axis direction, to enlarge and display a string at and around a position to which the specified position has been moved in the first axis direction in the specified line, and if it has been determined that there is a line next to the specified line, to enlarge and display a string at and around a head of the next line.

2. The terminal device as claimed in claim 1, wherein the display control unit (107) is further configured to enlarge and display the string at and around the position in the first axis direction in the specified line until specification of the position is released.

3. The terminal device as claimed in claim 1, wherein the determination unit (106) is further configured to separate movement of the position into a component on the first axis, and a component on a second axis that is orthogonal to the first axis, and if the component on the second axis is greater than the component on the first axis, determine whether a position in the second axis direction represented by the component of the second axis has been moved by a second threshold or greater,
   wherein if it has been determined that the position in the second axis direction has been moved by the second threshold or greater, the display control unit (107) is configured to enlarge and display a string at and around a head of a line at or around the position in the second axis direction.

4. The terminal device as claimed in claim 1, wherein the display control unit (107) is further configured to enlarge and display the string at and around the specified position, by units of words in the specified line.

5. A display control method, executed by a computer, the method comprising:

extracting (S12; S50) one or more strings from a character area included in image data by units of lines;
determining (S22; S40; S56) whether a position specified in a specified line among the strings extracted by units of lines has been moved by a first threshold or greater in a first axis direction that represents a line direction and determining (S26; S42), in response to release of the specification of the position (24, 28), whether there is a line next to the specified line; and
enlarging (S16) and displaying (S14), if it has been determined that the specified position has been moved by the first threshold or greater in the first axis direction, a string at and around a position to which the specified position has been moved in the first axis direction in the specified line, and if it has been determined that there is a line next to the specified line, enlarging and displaying a string at and around a head of the next line.

6. The display control method as claimed in claim 5, wherein the enlarging and displaying enlarge and display the string at and around the position in the first axis direction in the specified line until specification of the position is released.

7. The display control method as claimed in claim 5, wherein the determining separates movement of the position into a component on the first axis, and a component on a second axis that is orthogonal to the first axis, and if the component on the second axis is greater than the component on the first axis, determines whether a position in the second axis direction represented by the component of the second axis has been moved by a second threshold or greater,
wherein if it has been determined that the position in the second axis direction has been moved by the second threshold or greater, the enlarging and displaying enlarge and display a string at and around a head of a line at or around the position in the second axis direction.

8. The display control method as claimed in claim 5, wherein the enlarging and displaying enlarge and display the string at and around the specified position, by units of words in the specified line.

9. A program for causing a computer to execute a process, the process comprising:

extracting (S12; S50) one or more strings from a character area included in image data by units of lines;
determining (S22; S40; S56) whether a position specified in a specified line among the strings extracted by units of lines has been moved by a first threshold or greater in a first axis direction that represents a line direction and determining (S26; S42), in response to release of the specification of the position (S24, S28), whether there is a line next to the specified line; and
enlarging (S16) and displaying (S14), if it has been determined that the specified position has been moved by the first threshold or greater in the first axis direction, a string at and around a position to which the specified position has been moved in the first axis direction in the specified line, and if it has been determined that there is a line next to the specified line, enlarging and displaying a string at and around a head of the next line.

10. The program as claimed in claim 9, wherein the enlarging and displaying enlarge and display the string at and around the position in the first axis direction in the specified line until specification of the position is released.

11. The program as claimed in claim 9, wherein the determining separates movement of the position into a component on the first axis, and a component on a second axis that is orthogonal to the first axis, and if the component on the second axis is greater than the component on the first axis, determines whether a position in the second axis direction represented by the component of the second axis has been moved by a second threshold or greater, wherein if it has been determined that the position in the second axis direction has been moved by the second threshold or greater, the enlarging and displaying enlarge and display a string at and around a head of a line at or around the position in the second axis direction.

12. The program as claimed in claim 9, wherein the enlarging and displaying enlarge and display the string at and around the specified position, by units of words in the specified line.

**Patentansprüche**

1. Endgerät, umfassend:

eine Extraktionseinheit (103), die konfiguriert ist, um eine oder mehrere Ketten aus einem Zeichenbereich, der in Bilddaten enthalten ist, in Zeileneinheiten zu extrahieren;

eine Bestimmungseinheit (106), die konfiguriert ist, um zu bestimmen, ob eine Position, die in einer vorgegebenen Zeile aus den Ketten, die in Zeileneinheiten extrahiert wurden, vorgegeben ist, um eine erste Schwelle oder mehr in einer ersten Achsenrichtung, die eine Zeilenrichtung darstellt, bewegt wurde, und um als Reaktion auf die Freigabe der Vorgabe der Position zu bestimmen, ob es eine Zeile neben der vorgegebenen Zeile gibt; und

eine Anzeigesteuereinheit (107), die konfiguriert ist, falls bestimmt wurde, dass die vorgegebene Position um die erste Schwelle oder mehr in der ersten Achsenrichtung bewegt wurde, um eine Kette in und im Bereich einer Position, in welche die vorgegebene Position in der ersten Achsenrichtung auf der vorgegebenen Zeile bewegt wurde, zu vergrößern und anzuzeigen, und falls bestimmt wurde, dass es eine Zeile neben der vorgegebenen Zeile gibt, um eine Kette an und im Bereich eines Kopfes der nächsten Zeile zu vergrößern und anzuzeigen.

2. Endgerät nach Anspruch 1, wobei die Anzeigesteuereinheit (107) ferner konfiguriert ist, um die Kette in und im Bereich der Position in der ersten Achsenrichtung auf der vorgegebenen Zeile zu vergrößern und anzuzeigen, bis die Vorgabe der Position freigegeben wird.

3. Endgerät nach Anspruch 1, wobei die Bestimmungseinheit (106) ferner konfiguriert ist, um die Bewegung der Position in eine Komponente auf der ersten Achse und eine Komponente auf einer zweiten Achse, die zu der ersten Achse orthogonal ist, zu trennen, und falls die Komponente auf der zweiten Achse größer als die Komponente auf der ersten Achse ist, um zu bestimmen, ob eine Position in der zweiten Achsenrichtung, die durch die Komponente der zweiten Achse dargestellt wird, um eine zweite Schwelle oder mehr bewegt wurde,

wobei, falls bestimmt wurde, dass die Position in der zweiten Achsenrichtung um die zweite Schwelle oder mehr bewegt wurde, die Anzeigesteuereinheit (107) konfiguriert ist, um eine Kette an und im Bereich eines Kopfes einer Zeile in und im Bereich der Position in der zweiten Achsenrichtung zu vergrößern und anzuzeigen.

4. Endgerät nach Anspruch 1, wobei die Anzeigesteuereinheit (107) ferner konfiguriert ist, um die Kette in und im Bereich der vorgegebenen Position in Worteinheiten auf der vorgegebenen Zeile zu vergrößern und anzuzeigen.

5. Anzeigesteuerverfahren, das durch einen Computer ausgeführt wird, wobei das Verfahren folgende Schritte umfasst:

Extrahieren (S12; S50) in Zeileneinheiten einer oder mehrerer Ketten aus einem Zeichenbereich, der in Bilddaten enthalten ist;

Bestimmen (S22; S40; S56), ob eine Position, die in einer vorgegebenen Zeile vorgegeben ist, aus den Ketten, die in Zeileneinheiten extrahiert wurden, um eine erste Schwelle oder mehr in einer ersten Achsenrichtung, die eine Zeilenrichtung darstellt, bewegt wurde, und Bestimmen (S26; S42), als Reaktion auf die Freigabe der Vorgabe der Position (24, 28), ob es eine Zeile neben der vorgegebenen Zeile gibt; und

Vergrößern (S16) und Anzeigen (S14), falls bestimmt wurde, dass die vorgegebene Position um die erste Schwelle oder mehr in der ersten Achsenrichtung bewegt wurde, einer Kette in und im Bereich einer Position, in welche die vorgegebene Position in der ersten Achsenrichtung auf der vorgegebenen Zeile bewegt wurde, und falls bestimmt wurde, dass es eine Zeile neben der vorgegebenen Zeile gibt, Vergrößern und Anzeigen einer Kette an und im Bereich eines Kopfes der nächsten Zeile.

6. Anzeigesteuerverfahren nach Anspruch 5, wobei das Vergrößern und Anzeigen die Kette in und im Bereich der Position in der ersten Achsenrichtung auf der vorgegebenen Zeile vergrößert und anzeigt, bis die Vorgabe der Position freigegeben wird.

7. Anzeigesteuerverfahren nach Anspruch 5, wobei das Bestimmen die Bewegung der Position in eine Komponente auf der ersten Achse und eine Komponente auf einer zweiten Achse, die zu der ersten Achse orthogonal ist, trennt, und falls die Komponente auf der zweiten Achse größer als die Komponente auf der ersten Achse ist, bestimmt, ob eine Position in der zweiten Achsenrichtung, die durch die Komponente der zweiten Achse dargestellt wird, um eine zweite Schwelle oder mehr bewegt wurde,

wobei, falls bestimmt wurde, dass die Position in der zweiten Achsenrichtung um die zweite Schwelle oder mehr bewegt wurde, das Vergrößern und Anzeigen eine Kette an und im Bereich eines Kopfes einer Zeile in und im Bereich der Position in der zweiten Achsenrichtung, vergrößert und anzeigt.

8. Anzeigesteuerverfahren nach Anspruch 5, wobei das Vergrößern und Anzeigen die Kette in und im Bereich der vorgegebenen Position in Worteinheiten auf der vorgegebenen Zeile vergrößert und anzeigt.

9. Programm zum Bewirken, dass ein Computer einen Prozess ausführt, wobei der Prozess folgende Schritte umfasst:

Extrahieren (S12; S50) in Zeileneinheiten einer oder mehrerer Ketten aus einem Zeichenbereich, der in Bilddaten enthalten ist;
Bestimmen (S22; S40; S56), ob eine Position, die in einer vorgegebenen Zeile vorgegeben ist, aus den Ketten, die in Zeileneinheiten extrahiert werden, um eine erste Schwelle oder mehr in einer ersten Achsenrichtung, die eine Zeilenrichtung darstellt, bewegt wurde, und Bestimmen (S26; S42), als Reaktion auf die Freigabe der Vorgabe der Position (S24, S28), ob es eine Zeile neben der vorgegebenen Zeile gibt; und
Vergrößern (S16) und Anzeigen (S14), falls bestimmt wurde, dass die vorgegebene Position um die erste Schwelle oder mehr in der ersten Achsenrichtung bewegt wurde, einer Kette in und im Bereich einer Position, in welche die vorgegebene Position in der ersten Achsenrichtung auf der vorgegebenen Zeile bewegt wurde, und falls bestimmt wurde, dass es eine Zeile neben der vorgegebenen Zeile gibt, Vergrößern und Anzeigen einer Kette an und im Bereich eines Kopfes der nächsten Zeile.

10. Programm nach Anspruch 9, wobei das Vergrößern und Anzeigen die Kette in und im Bereich der Position in der ersten Achsenrichtung auf der vorgegebenen Zeile vergrößert und anzeigt, bis die Vorgabe der Position freigegeben wird.

11. Programm nach Anspruch 9, wobei das Bestimmen die Bewegung der Position in eine Komponente auf der ersten Achse und eine Komponente auf einer zweiten Achse, die zu der ersten Achse orthogonal ist, trennt, und falls die Komponente auf der zweiten Achse größer als die Komponente auf der ersten Achse ist, bestimmt, ob eine Position in der zweiten Achsenrichtung, die durch die Komponente der zweiten Achse dargestellt wird, um eine zweite Schwelle oder mehr bewegt wurde,
wobei, falls bestimmt wurde, dass die Position in der zweiten Achsenrichtung um die zweite Schwelle oder mehr bewegt wurde, das Vergrößern und Anzeigen eine Kette an und im Bereich eines Kopfes einer Zeile in und im Bereich der Position in der zweiten Achsenrichtung vergrößert und anzeigt.

12. Programm nach Anspruch 9, wobei das Vergrößern und Anzeigen die Kette in und im Bereich der vorgegebenen Position in Worteinheiten auf der vorgegebenen Zeile vergrößert und anzeigt.

**Revendications**

1. Dispositif terminal, comprenant :

une unité d'extraction (103) configurée de manière à extraire une ou plusieurs chaînes d'une zone de caractères incluse dans des données d'image, par unités de lignes ;
une unité de détermination (106) configurée de manière à déterminer si une position spécifiée dans une ligne spécifiée parmi les chaînes extraites, par unités de lignes, a été déplacée d'un premier seuil ou plus dans une première direction d'axe qui représente une direction de ligne, et à déterminer, en réponse à la libération de la spécification de la position, s'il existe une ligne adjacente à la ligne spécifiée ; et
une unité de commande d'affichage (107) configurée, s'il a été déterminé que la position spécifiée a été déplacée du premier seuil ou plus dans la première direction d'axe, de manière à agrandir et à afficher une chaîne à et autour d'une position à laquelle la position spécifiée a été déplacée dans la première direction d'axe dans la ligne spécifiée, et s'il a été déterminé qu'il existe une ligne adjacente à la ligne spécifiée, à agrandir et à afficher une chaîne à et autour d'une tête de la ligne successive.

2. Dispositif terminal selon la revendication 1, dans lequel l'unité de commande d'affichage (107) est en outre configurée de manière à agrandir et à afficher la chaîne à et autour de la position dans la première direction d'axe dans la ligne spécifiée, jusqu'à ce que la spécification de la position soit libérée.

3. Dispositif terminal selon la revendication 1, dans lequel l'unité de détermination (106) est en outre configurée de manière à séparer le déplacement de la position en une composante sur le premier axe et une composante sur un second axe qui est orthogonal au premier axe, et si la composante sur le second axe est supérieure à la composante sur le premier axe, à déterminer si une position dans la seconde direction d'axe représentée par la composante du second axe a été déplacée d'un second seuil ou plus ;
dans lequel s'il a été déterminé que la position dans la seconde direction d'axe a été déplacée du second seuil ou plus, l'unité de commande d'affichage (107) est configurée de manière à agrandir et à afficher une chaîne à et autour d'une tête d'une ligne à ou autour de la position dans la seconde direction d'axe.

4. Dispositif terminal selon la revendication 1, dans lequel l'unité de commande d'affichage (107) est en outre configurée de manière à agrandir et à afficher la chaîne à et autour de la position spécifiée, par unités de mots dans la ligne spécifiée.

5. Procédé de commande d'affichage, exécuté par un ordinateur, le procédé comprenant les étapes ci-dessous consistant à :

extraire (S12 ; S50) une ou plusieurs chaînes d'une zone de caractères incluse dans des données d'image, par unités de lignes ;
déterminer (S22 ; S40 ; S56) si une position spécifiée dans une ligne spécifiée parmi les chaînes extraites, par unités de lignes, a été déplacée d'un premier seuil ou plus dans une première direction d'axe qui représente une direction de ligne, et déterminer (S26 ; S42), en réponse à la libération de la spécification de la position (24, 28), s'il existe une ligne adjacente à la ligne spécifiée ; et
agrandir (S16) et afficher (S14), s'il a été déterminé que la position spécifiée a été déplacée du premier seuil ou plus dans la première direction d'axe, une chaîne à et autour d'une position à laquelle la position spécifiée a été déplacée dans la première direction d'axe dans la ligne spécifiée, et s'il a été déterminé qu'il existe une ligne adjacente à la ligne spécifiée, agrandir et afficher une chaîne à et autour d'une tête de la ligne successive.

6. Procédé de commande d'affichage selon la revendication 5, dans lequel l'étape d'agrandissement et d'affichage agrandit et affiche la chaîne à et autour de la position dans la première direction d'axe dans la ligne spécifiée jusqu'à ce que la spécification de la position soit libérée.

7. Procédé de commande d'affichage selon la revendication 5, dans lequel l'étape de détermination sépare le déplacement de la position en une composante sur le premier axe et une composante sur un second axe qui est orthogonal au premier axe, et si la composante sur le second axe est supérieure à la composante sur le premier axe, l'étape détermine si une position dans la seconde direction d'axe représentée par la composante du second axe a été déplacée d'un second seuil ou plus ;
dans lequel s'il a été déterminé que la position dans la seconde direction d'axe a été déplacée du second seuil ou plus, l'étape d'agrandissement et d'affichage agrandit et affiche une chaîne à et autour d'une tête d'une ligne à ou autour de la position dans la seconde direction d'axe.

8. Procédé de commande d'affichage selon la revendication 5, dans lequel l'étape d'agrandissement et d'affichage agrandit et affiche la chaîne à et autour de la position spécifiée, par unités de mots, dans la ligne spécifiée.

9. Programme destiné à amener un ordinateur à exécuter un processus, le processus comprenant les étapes ci-dessous consistant à :

extraire (S12 ; S50) une ou plusieurs chaînes d'une zone de caractères incluse dans des données d'image, par unités de lignes ;
déterminer (S22 ; S40 ; S56) si une position spécifiée dans une ligne spécifiée parmi les chaînes extraites, par unités de lignes, a été déplacée d'un premier seuil ou plus dans une première direction d'axe qui représente une direction de ligne, et déterminer (S26 ; S42), en réponse à la libération de la spécification de la position (S24, S28), s'il existe une ligne adjacente à la ligne spécifiée ; et
agrandir (S16) et afficher (S14), s'il a été déterminé que la position spécifiée a été déplacée du premier seuil ou plus dans la première direction d'axe, une chaîne à et autour d'une position à laquelle la position spécifiée a été déplacée dans la première direction d'axe dans la ligne spécifiée, et s'il a été déterminé qu'il existe une ligne adjacente à la ligne spécifiée, agrandir et afficher une chaîne à et autour d'une tête de la ligne successive.

10. Programme selon la revendication 9, dans lequel l'étape d'agrandissement et d'affichage agrandit et affiche la chaîne à et autour de la position dans la première direction d'axe dans la ligne spécifiée jusqu'à ce que la spécification de la position soit libérée.

11. Programme selon la revendication 9, dans lequel l'étape de détermination sépare le déplacement de la position en une composante sur le premier axe et une composante sur un second axe qui est orthogonal au premier axe, et si la composante sur le second axe est supérieure à la composante sur le premier axe, l'étape détermine si une position dans la seconde direction d'axe représentée par la composante du second axe a été déplacée d'un second seuil ou plus ;

dans lequel, s'il a été déterminé que la position dans la seconde direction d'axe a été déplacée du second seuil ou plus, l'étape d'agrandissement et d'affichage agrandit et affiche une chaîne à et autour d'une tête d'une ligne à ou autour de la position dans la seconde direction d'axe.

12. Programme selon la revendication 9, dans lequel l'étape d'agrandissement et d'affichage agrandit et affiche la chaîne à et autour de la position spécifiée, par unités de mots dans la ligne spécifiée.

# FIG.1

EP 3 125 088 B1

# FIG.2

```
                         ┌──────────────┐
                         │    INPUT     │
                         │  OPERATION   │
                         └──────────────┘                      ⟋1
┌──────────────────────────────│──────────────────────────────────────┐
│                               │                                      │
│          ⟋103                 ▼    ⟋104                  ⟋107        │
│   ┌──────────────┐     ┌──────────────┐     ┌──────────────┐         │
│   │  EXTRACTION  │────▶│   POSITION   │────▶│   DISPLAY    │         │
│   │     UNIT     │     │DETECTION UNIT│     │ CONTROL UNIT │         │
│   └──────────────┘     └──────────────┘     └──────────────┘         │
│          ▲  ▲                  │                    ▲                 │
│ 101╲     │  │ IMAGE DATA       ▼   ⟋105             │    ⟋106        │
│   ┌──────────────┐     ┌──────────────┐     ┌──────────────┐         │
│   │ IMAGING UNIT │     │  PROCESSING  │     │ DETERMINATION│         │
│   │              │     │     UNIT     │─────│     UNIT     │         │
│   └──────────────┘     └──────────────┘     └──────────────┘         │
│          │                                                           │
│          ⟋102            ⟋108           ⟋109            ⟋110         │
│   ┌──────────────┐ ┌───────────┐ ┌──────────────┐ ┌──────────────┐   │
│   │ STORAGE UNIT │ │ COMMUNICA-│ │   WIRELESS   │ │ SOUND INPUT  │   │
│   │              │ │  TION I/F │ │COMMUNICATION I/F│ │ /OUTPUT I/F │   │
│   └──────────────┘ └───────────┘ └──────────────┘ └──────────────┘   │
│                                                                      │
└──────────────────────────────────────────────────────────────────────┘
```

20

FIG.3

START

S10
CAPTURE IMAGE

S12
ANALYZE LAYOUT
(EXTRACT LINE)

S14
DISPLAY LINE IMAGE

S16
DISPLAY ENLARGED IMAGE

S30
EXTRACT COMPONENT
IN LINE DIRECTION
OF DRAGGING, AND
MOVE DISPLAY AREA

S18
IS IT END
OPERATION?　　YES　　END

NO

S20
DRAG

S22
IS IT MOVING IN
LINE DIRECTION?　　NO　　

S32
IS IT
MOVING IN NEXT LINE
DIRECTION?　　NO

YES

S24
IS IT MOVING TO
END OF LINE?　　YES

YES

S26
MOVE IT TO HEAD OF NEXT LINE

NO

S28
IS IT MOVING TO
HEAD OF LINE?　　YES

S34
MOVE IT TO HEAD OF
PREVIOUS LINE

NO

EP 3 125 088 B1

# FIG.4A

Fprotsu at a Glance
Fprotsu is the leading Japanese
information and communication
technology (ICT) company
offering a full range of technology
products, solutions and services.

EXTRACT STRINGS BY UNITS OF LINES

# FIG.4B

Fprotsu at a Glance
Fprotsu is the leading Japanese
information and communication
technology (ICT) company
offering a full range of technology
products, solutions and services.

# FIG.4C

CENTERLINE OF CURRENT LINE

NEXT LINE

ENLARGED DISPLAY SCREEN 2

LINE DISPLAY SCREEN 3

AREA FOR ENLARGED DISPLAY 4

Fprotsu at a Glance

5

22

# FIG.5A

EXTRACT
STRINGS
BY UNITS
OF LINES

# FIG.5B

# FIG.5C

CENTERLINE OF CURRENT LINE

NEXT LINE

EP 3 125 088 B1

EP 3 125 088 B1

## FIG.6A

SECOND AXIS

u at a Gla

FIRST AXIS

Fprotsu at a Glance

4   5

## FIG.6B

SECOND AXIS

a Glance

FIRST AXIS

Fprotsu at a Glance

4   5

## FIG.6C

SECOND AXIS

Fprotsu i

FIRST AXIS

Fprotsu is the leading Japanese

5   4

## FIG.6D

SECOND AXIS

Fprotsu is the

FIRST AXIS

Fprotsu is the leading Japanese

5   4

FIG.7

START

CAPTURE IMAGE — S10

ANALYZE LAYOUT (EXTRACT LINE) — S12

DISPLAY LINE IMAGE — S14

DISPLAY ENLARGED IMAGE — S16

IS IT END OPERATION? — S18
YES → END

NO

DRAG — S20

DOES DRAGGING STOP? — S40
YES → IS THERE NEXT LINE? — S42
NO
YES → MOVE IT TO HEAD OF NEXT LINE — S26

NO

IS IT MOVING TO END OF LINE? — S24
YES → MOVE IT TO HEAD OF NEXT LINE — S26

NO

IS IT MOVING TO HEAD OF LINE? — S28
YES → MOVE IT TO HEAD OF PREVIOUS LINE — S34

NO

EXTRACT COMPONENT IN LINE DIRECTION OF DRAGGING, AND MOVE DISPLAY AREA — S30

EP 3 125 088 B1

FIG.8A

FIG.8B

2{ u at a Gla

3{ Fprotsu at a Glance

4  5

2{ a Glance

3{ Fprotsu at a Glance

4

2{ Fprotsu i

3{ Fprotsu is the leading Japanese

5  4

2{ Fprotsu is the

3{ Fprotsu is the leading Japanese

5  4

FIG.8C

FIG.8D

EP 3 125 088 B1

# FIG.9

START

S10

CAPTURE IMAGE

S50

ANALYZE LAYOUT
(EXTRACT LINE; CENTERLINE
OF LINE: ax+by+c=0)

S52

START DRAGGING (STORE
START COORDINATES $(x_0, y_0)$)

S14

DISPLAY LINE IMAGE

S16

DISPLAY ENLARGED IMAGE

S60

MOVE DISPLAY AREA
BY POINT OF
DRAGGING AS CENTER

S18

IS IT END
OPERATION? — YES — END

NO

S54

DETECT COORDINATES (x, y) OF
INTERMEDIATE POINT OF DRAGGING

S56

NO — DIFFERENCE
OF DISTANCE Δ
FROM START POINT OF
DRAGGING ≧
THRESHOLD?

YES

S58

SET COORDINATES (x,y) OF
INTERMEDIATE POINT OF
DRAGGING TO $(x_2, y_2)$

S24

IS IT MOVING
TO END OF LINE? — YES — MOVE IT TO HEAD
OF NEXT LINE — S26

NO

S28

IS IT MOVING
TO HEAD OF LINE? — YES — MOVE IT TO HEAD
OF PREVIOUS LINE — S34

NO

FIG.10

START POINT
OF DRAGGING: $(x_0, y_0)$

INTERMEDIATE POINT
OF DRAGGING: $(x, y)$

CENTERLINE OF LINE CLOSE TO
START POINT OF DRAGGING:
$ax+by+c=0$

POINT PROJECTED ON CENTERLINE:
$(x_1, y_1)= (x_0, y_0) - (ax_0+by_0+c)(a, b)/(a^2+b^2)$

POINT PROJECTED ON CENTERLINE:
$(x_2, y_2)= (x, y) - (ax+by+c)(a, b)/(a^2+b^2)$

DIFFERENCE BETWEEN $(x_1,y_1)$ AND $(x_2,y_2)$ $\Delta$ IS
DEFINED AS FOLLOWS:
$\Delta = |x_2-x_1|$, IF $|a/b|<1$
$\Delta = |y_2-y_1|$, OTHERWISE

# FIG.11

# FIG.12

EP 3 125 088 B1

# FIG.13

SECOND AXIS

Ln-1

STRING IN LINE

P5  P6  P7

Ln

SECOND THRESHOLD

FIRST AXIS

5

P8

5

Ln+1

4

START POINT

FIG.14A

FIG.14B

FIG.14C

EP 3 125 088 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005311888 A
- JP 2005049920 A
- JP 2009271901 A
- JP 2013080513 A
- JP 2012226393 A
- US 2014013216 A1
- US 2013042199 A1
- US 2012306778 A1
- US 2013002719 A1